# EUROPÄISCHE PATENTSCHRIFT

(11) **EP 2 702 680 B1**
(45) Veröffentlichungstag und Bekanntmachung des Hinweises auf die Patenterteilung: **12.06.2019**
(21) Anmeldenummer: 12708278.2
(22) Anmeldetag: 28.02.2012
(51) Int. Cl.: H02M 7/49, H02J 3/38

(54) **ANSTEUERVERFAHREN FÜR EINEN WECHSELRICHTER UND WECHSELRICHTER, INSBESONDERE FÜr SOLARZELLEN**
CONTROL METHOD FOR AN INVERTER, AND INVERTER, PARTICULARLY FOR SOLAR CELLS
PROCÉDÉ DE COMMANDE POUR UN ONDULEUR ET ONDULEUR, EN PARTICULIER POUR CELLULES SOLAIRES

(30) Priorität: 27.04.2011 DE 102011017601
(43) Veröffentlichungstag der Anmeldung: 05.03.2014
(73) Patentinhaber: SMA Solar Technology AG, 34266 Niestetal (DE)
(72) Erfinder: RUF, Armin, 70435 Stuttgart (DE); BOHL, Raimund, 72076 Tuebingen (DE); WIELAND, Peter, 70771 Leinfelden (DE); FEUCHTER, Bernhard, 71336 Waiblingen (DE); KRAUTER, Gisbert, 71737 Kirchberg (DE)
(74) Vertreter: Lahnor, Peter
(86) Internationale Anmeldenummer: PCT/EP2012/053335
(87) Internationale Veröffentlichungsnummer: WO 2012/146414

(56) Entgegenhaltungen:
- WO-A1-2008/098812
- DE-A1-102009 029 387
- DE-A1-102009 047 936
- US-A1- 2006 250 831

## Beschreibung

Die Erfindung betrifft ein Ansteuerverfahren für einen Wechselrichter und eine DC-AC-Wechselrichteranordnung nach dem Oberbegriff des Anspruchs 1

### Stand der Technik

Die Erfindung adressiert den Bereich der elektrischen Energiewandlung insbesondere aus regenerativen Energiequellen. Dazu zählen beispielsweise Photovoltaik-Systeme, Windkraftanlagen, Stirlingmaschinen, Wärmepumpen oder Brennstoffzellen sowie Batteriesysteme, wobei Ladung und Entladung relevant ist.

Speziell betroffen sind dabei Umrichter, welche Gleichstrom in Wechselstrom oder Wechselstrom in Gleichstrom umwandeln und beispielsweise zur Einspeisung von Energie aus Photovoltaik-Anlagen in ein 50-Hz-Wechselspannungsnetz verwendet werden.

Der steigende Bedarf an regenerativen Energiequellen führt unter anderem zu einer stetigen Effizienzerhöhung bekannter Technologien. Verschiedene Hersteller am Markt bieten unterschiedliche Systeme an, um mit möglichst hohem Wirkungsgrad elektrische Energie einer Gleichspannungsquelle zu wandeln mit einer Anpassung von Spannung und Frequenz und diese Energie dann in eine Wechselstromlast oder ein Wechselstromnetz einzuspeisen. Hinzu kommt die Forderung der Energieversorgungsunternehmen, dass derartige Wechselrichter zukünftig blindleistungsfähig sein müssen.

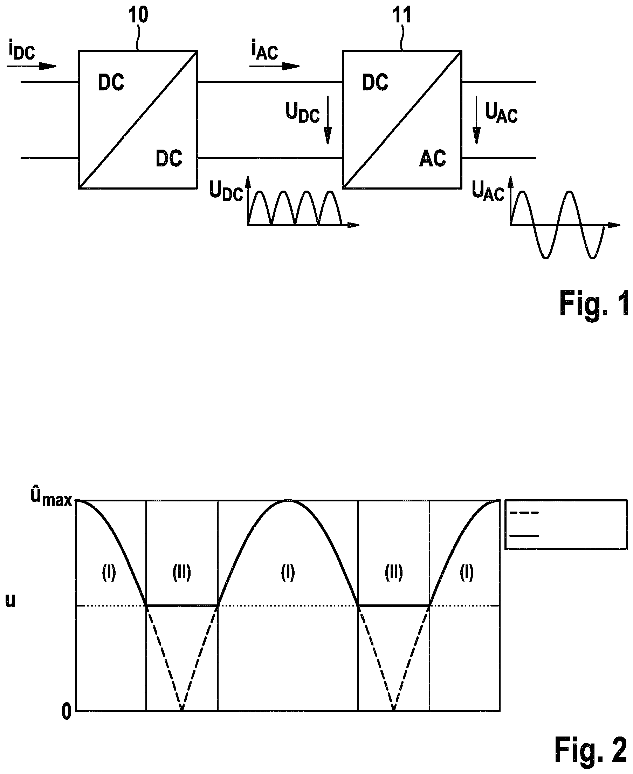

Ein aus der Anmeldung DE-102009029387.6 und der EP-1 227 599 A2 bekannter Inverter mit zugehörigem Regelverfahren ist in Figur 1 dargestellt. Ausgehend von solch einem bekannten Inverter und Regelverfahren wird die erfindungsgemäße Lösung beschrieben.

Bei der bekannten Lösung wird über einen Gleichstromsteller (DC/DC) 10 eine betrags-sinus-förmige Spannung U_{DC} erzeugt. Diese wird über eine Brücke (DC/AC) 11, welche auch als Polwender bezeichnet wird, zu einer sinusförmigen Spannung U_{AC} umgeformt. Dies geschieht durch Invertieren jeder zweiten Halbwelle der betrags-sinus-förmigen Spannung. Dadurch können Halbleiterbauelemente in der Brücke auf niedrige Leitverluste ausgelegt werden, denn die Brücke schaltet dabei mit der doppelten Netzfrequenz (100 mal bei 50 Hz) und nur, wenn die ausgangsseitige Spannung einen Nulldurchgang hat. Dabei treten vernachlässigbare Schaltverluste auf.

Wird der Gleichstromsteller (DC/DC) 10 so ausgelegt, dass ein Leistungsfluss in beide Richtungen möglich ist, ist die gesamte Inverteranordnung prinzipiell blindleistungsfähig. Der am Eingang des Gleichstromstellers 10 fließende Strom wird mit i_{DC} und der eingestellte Strom zwischen Gleichstromsteller 10 und Brücke 11 mit i_{AC} bezeichnet.

Bei dem aus der DE-102009029387.6 bekannten Inverter können für einige der Schalter der Brückenschaltung Transistoren mit niedrigem R_{ds,on} verwendet werden. Dies kann zur Verringerung der Verlustleistung beitragen, da diese Bauteile nur auf den Scheitelwert der Ausgangsspannung ausgelegt werden müssen und somit sehr niedrige R_{ds,on} aufweisen können, auch bei einem großen Eingangsspannungsbereich des Umrichters. Zusätzlich ist möglich, dass diese Transistoren auch bei Rückwärtsleitung über eine Diode eingeschaltet werden, so dass auch bei diesem Betriebszustand ein nur minimaler Spannungsabfall am Bauteil erzeugt wird. Da der bekannte Gleichstromsteller gegenüber der Brückenschaltung nur zwei statt vier Halbleiterbauelemente besitzt, treten bei sonst vergleichbaren elektrischen Eigenschaften der Schaltung nur halb so große Schaltverluste auf wie im allgemein üblichen Fall.

Weitere Lösungen für Wechselrichter zeigen das Paper: "Operation and Control of a High Performance Inverter Consisting of a Buck-Boost and Zero Switching Losses H-Bridge for Photovoltaic Systems", P. SANCHIS, A. URSUA, E. GUBIA and L. MARROYO, IEEE 2004 und die Patentschriften CH-700030B1 und CH-698917B1.

Die US 2006/0250831 A1 zeigt einen Wechselrichter mit einem Gleichstromsteller und einer Brückenschaltung, wobei der Gleichstromsteller eine Spannungsverstärkungsschaltung zum Verstärken einer Ausgangsspannung des Gleichstromstellers aufweist.

Die DE 10 2009 047 936 A1 zeigt ein Verfahren zum Betreiben eines Wechselrichters, durch das eine Gleichspannung dynamisch auf einen aktuell im Netz benötigten Wert angepasst werden kann.

Allgemein und im Stand der Technik werden dabei gleichbedeutend die folgenden Begriffe verwendet:
Solarinverter = Solarwechselrichter = Wechselrichter = Umrichter = Inverter Gleichstromsteller = Gleichspannungswandler.

Das in der EP-1 227 599 A2 aufgeführte Verfahren ist - bedingt durch die Arbeitsweise der Brücke (DC/AC) - nur eingeschränkt blindleistungsfähig. Das Verfahren basiert darauf, die Brücke als Polwender im Nullpunkt der Brücken-Eingangsspannung umzuschalten. Bei reiner Wirkleistungsaufnahme/-Abgabe auf der AC-Seite des Umrichters ist zu diesem Zeitpunkt der Strom auf der DC-Seite der Brücke ebenfalls näherungsweise null. Ein kleiner von null verschiedener Strom auf der DC-Seite der Brücke kann sich durch eine Phasenverschiebung durch passive Elemente in der Brückenschaltung ergeben.

Sofern auf der AC-Seite der Brücke vom Inverter Blindleistung bereitgestellt wird, ergibt sich - abhängig vom gewünschten Leistungsfaktor und dem Vorzeichen der Phasenverschiebung - zum Umschaltzeitpunkt der Brücke ein von null verschiedener Strom auf der DC-Seite der Brücke. Um einen sinusförmigen Strom auf der AC-Seite zu erhalten, müsste dieser Strom zum Umschaltzeitpunkt das Vorzeichen ändern. Die Umkehrung des Stromflusses ist jedoch aufgrund von induktiven Bauelementen nicht beliebig schnell realisierbar. Hinzu kommt, dass die Spannung im Umschaltzeitpunkt null ist, was zu einer geringen Stellreserve für die Richtungsumkehr von i_{DC} führt und daher die Problematik zusätzlich verschärft.

Die Konsequenz aus der beschriebenen Problematik ist, dass für die Einhaltung der Grenzwerte für die Strom-Oberschwingungen (aus den Normen DIN EN 61000-3-2 bzw. DIN EN 61000-3-12) auf der AC-Seite der Brücke eine Dimensionierung der passiven Bauteile notwendig wäre, die sich äußerst ungünstig auf den Wirkungsgrad des Umrichters auswirken würde.

Für Umrichterschaltungen, welche für das oben beschriebene Verfahren geeignet sind und einen bidirektionalen Leistungsfluss zulassen, beschreibt die Erfindung eine neue Betriebsweise, die zu einer verbesserten Blindleistungsfähigkeit bei gleichzeitiger Einhaltung der Grenzwerte für die Stromoberschwingungen und einem sehr guten Wirkungsgrad führt.

### Zeichnungen

Vorteile und Zweckmäßigkeiten der Erfindung ergeben sich im übrigen aus der nachfolgenden Beschreibung von Ausführungsbeispielen anhand der Figuren.

Dabei zeigen:

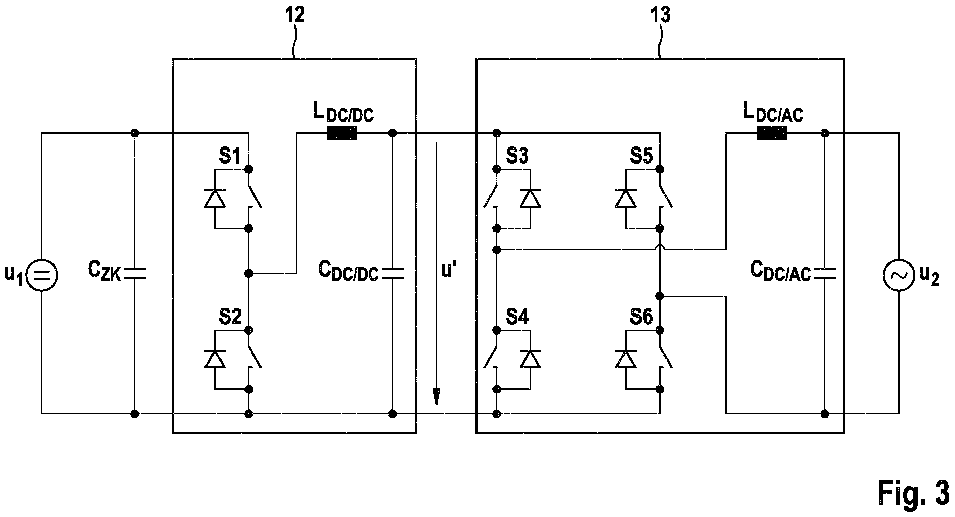

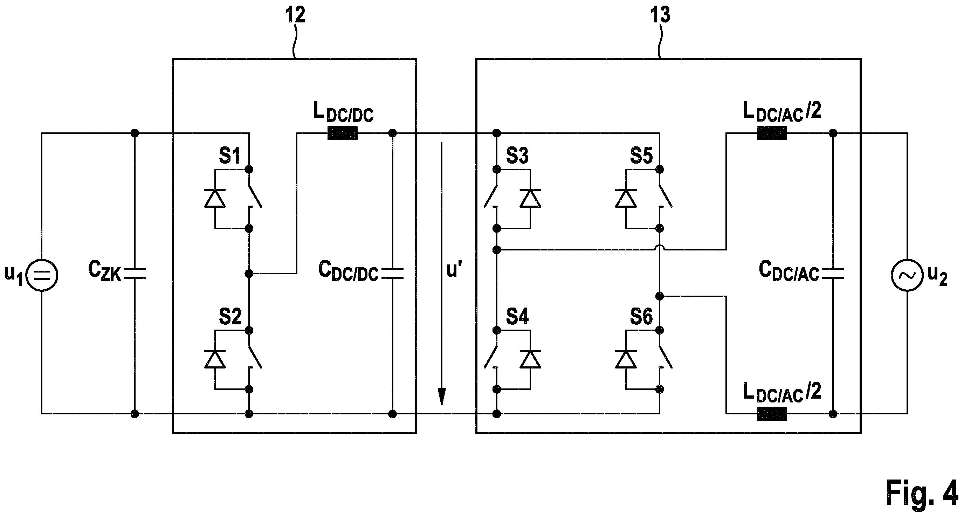

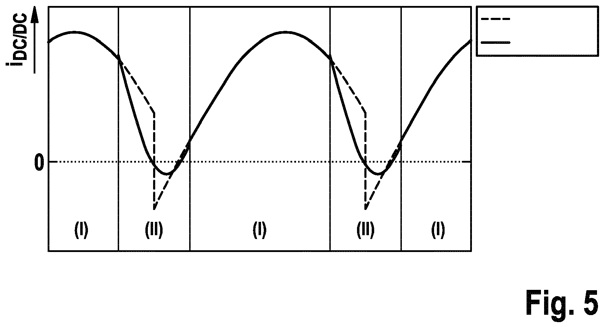

Figur 1 eine aus der EP-1 227 599 A2 bekannte Inverter-Struktur, Figur 2 den Verlauf der Ausgangsspannung u' des Gleichstromstellers für das bekannte und das erfindungsgemäße Verfahren. Figur 3 eine Topologie mit DC/AC Drossel oben und Figur 4 eine Topologie mit geteilter DC/AC Drossel. In Figur 5 sind Stromverläufe für das bekannte und das erfindungsgemäße Verfahren dargestellt.

### Kern und Vorteile der Erfindung

Bei dem aus der EP-1 227 599 bekannten Verfahren liegt eine strikte Aufgabenteilung zwischen dem Gleichstromsteller (DC/DC) und der Brücke (DC/AC) vor: Der Gleichstromsteller regelt die Spannung u_{DC} auf den Betrag der Spannung u_{AC}. Die Brücke stellt dann das Vorzeichen der Ausgangsspannung ein, d.h. diese arbeitet als Polwender. Diese Trennung ist möglich, weil bei reiner Wirkleistung die Vorzeichen von Strom und Spannung identisch sind.

Das erfindungsgemäße neue Verfahren hebt diese Trennung mit dem Ziel der Blindleistungsfähigkeit in bestimmten Abschnitten einer jeden Sinushalbwelle auf. Verdeutlicht wird dies in Figur 2. Dabei zeigt Figur 2 den Verlauf der Ausgangsspannung u' des Gleichstromstellers für das bekannte und das erfindungsgemäße Verfahren. Die maximale Spannung beträgt Uₘₐₓ. In den Teilen bzw. Abschnitten (I) einer Sinushalbwelle, in denen die Ausgangsspannung des Gleichstromstellers nach dem aus der EP-1 227 599 A2 aufgeführten Verfahren größer als eine Schwellspannung u_{schwell} ist, kommt das Verfahren unverändert zum Einsatz. In den Teilen bzw. Abschnitten (II) einer Sinushalbwelle, in denen diese Ausgangsspannung kleiner als die Schwellspannung u_{schwell} wäre, gilt nun abweichend: Der Gleichstromsteller stellt eine konstante Spannung u' ein, die vorteilhaft der Schwellspannung u_{schwell} entspricht und die Brücke übernimmt die Regelung des Betrags und des Vorzeichens der Wechsel-/Ausgangsspannung. Dadurch werden die Vorteile des bekannten Verfahrens mit der Blindleistungsfähigkeit der H-Brücke verbunden. Die Definition weiterer Abschnitte mit der Durchführung anderer Ansteuerverfahren wäre gegebenenfalls möglich.

In den in Fig. 2 mit (I) bezeichneten Abschnitten einer Sinushalbwelle werden nur die Halbleiterschalter im Gleichstromsteller getaktet; von den vier Schaltern der Brücke sind je zwei konstant geschlossen bzw. konstant geöffnet. Dadurch ergibt sich insgesamt ein sehr guter Wirkungsgrad.

In den in Fig. 2 mit (II) bezeichneten Abschnitten einer Sinushalbwelle stellt der Gleichstromsteller eine konstante Ausgangsspannung ein. Durch Takten der Schalter der Brücke wird daraus die gewünschte Spannung auf der AC-Seite der Brücke eingestellt.

### Schaltungstopologien

Da ein wesentliches Ziel des hier vorgestellten Verfahrens die Verbesserung der Blindleistungsfähigkeit ist, ist seine Anwendung insbesondere für rückspeisefähige Topologien sinnvoll. Beispielhaft seien hier die in Fig. 3 und Fig. 4 dargestellten Topologien genannt. Im Unterschied zu Schaltungstopologien, welche für das bekannte Verfahren ausgelegt sind, ist für das erfindungsgemäße neue Verfahren - bedingt durch den zeitweise getakteten Betrieb der Brücke - ein AC-Filter zwingend erforderlich.

Ausführungsbeispiele der Erfindung sind in den Figuren 3 und 4 dargestellt. Dabei zeigt Fig. 3 eine Topologie mit DC/AC Drossel L_{DC/AC} oben (auf die Spannung bezogen) und Fig. 4 eine Topologie mit geteilter DC/AC-Drossel L_{DC/AC}/2. Die beiden dargestellten Topologien unterscheiden sich durch die Anordnung der Induktivität L_{DC/AC} des AC-Filters. Sollen Potentialsprünge an den Anschlussklemmen der Gleichspannungsquelle bezüglich der Anschlussklemmen der Wechselspannungsquelle verhindert bzw. reduziert werden, ist ein Betrieb der in Fig. 3 dargestellten Topologie nur mit Schalten von Freilaufzuständen möglich, während ein Betrieb der in Fig. 4 dargestellten Topologie nur ohne Nutzung der Freilaufzustände möglich ist.

Für das Verständnis der Erfindung sollen noch die weiteren relevanten Schaltungskomponenten der Ausführungsbeispieles nach Figur 3 oder 4 angegeben werden. Ein Gleichstromsteller 12 umfasst die Schaltelemente S1 und S2 sowie die Induktivität L_{DC/DC} und den Kondensator C_{DC/DC}, an dem die Spannung u' liegt. Die Brücke bzw. Brückenschaltung 13 umfasst vier Schaltelemente S3 bis S6 sowie die Drossel L_{DC/AC} bzw. geteilter DC/AC-Drossel L_{DC/AC}/2 und den Kondensator C_{DC/AC}. Die Netzspannung ist mit U₂ bezeichnet. Eingangsseitig wird dem Gleichstromstelle 12 die Gleichspannung U₁ über den Zwischenkreiskondensator C_{ZK} zugeführt. Die Drossel L_{DC/AC} bzw. die geteilten DC/AC-Drosseln L_{DC/AC}/2 und der Kondensator C_{DC/AC} können auch außerhalb der Brückenschaltung, jedoch dieser nachgeschaltet sein. Die Schaltelemente S1 -S6 sind insbesondere Halbleiterschaltelemente.

### Funktionsweise im Abschnitt (I)

Die Funktionsweise im Abschnitt (I) ist gleich mit der Funktionsweise des in der EP-1 227 599 A2 oder der DE-102009029387.6 beschriebenen Verfahrens, d.h. der Gleichstromsteller regelt den Betrag der Spannung und die Brücke stellt das Vorzeichen der Spannung ein. Details sind in der DE-102009029387.6 beschrieben. Wesentlich ist, dass der Gleichstromsteller zur Erzeugung von Halbwellen einer ausgangsseitigen Wechselspannung vorgesehen ist und die Brückenschaltung dem Gleichstromsteller nachgeschaltet ist und als Polwender auf die vom Gleichstromsteller gelieferten Halbwellen wirkt.

### Funktionsweise Gleichstromsteller im Abschnitt (II)

Im Abschnitt (II) hat der Gleichstromsteller die Aufgabe, durch ein geeignetes Steuer-/Regelverfahren die Ausgangsspannung u' (=Regelgröße) konstant zu halten. Dabei soll die Spannung u' der in Fig. 2 dargestellten Schwellspannung (= Sollgröße) entsprechen. Der Strom- bzw. Leistungsfluss zwischen dem Gleichstromsteller und der Brücke, welcher grundsätzlich in beide Richtungen stattfinden kann, wirkt hierbei als Störgröße, die der Regler in geeigneter Weise kompensieren muss. Die Ansteuerung der Schalter kann zum Beispiel durch ein Pulsweiten-Modulations-Verfahren aus dem Stellsignal der Steuerung/Regelung berechnet werden.

### Funktionsweise Brücke im Abschnitt (II)

Aus Sicht der Brücke ist der Gleichstromsteller mit dem beschriebenen Steuer-/Regelunsgverfahren - sofern dieses ideal arbeitet - eine Gleichspannungsquelle, an deren Anschlussklemmen konstant die Schwellspannung (vgl. Fig. 2) anliegt; die Spannung u' ist die Eingangsspannung, die Spannung u₂ ist die Ausgangsspannung der Brücke. Die Aufgabe der Brücke ist es, mit Hilfe eines Steuer-/Regelungsverfahren aus der Eingangsspannung u' eine gewünschte Ausgangsspannung u₂ derart zu erzeugen, dass ein gewünschter Strom eingespeist wird. Als Steuer-/Regelungsverfahren kommen dazu prinzipiell die gleichen Verfahren in Betracht, die auch zur Regelung/Steuerung eines Umrichters auf Basis einer reinen Brückenschaltung Verwendung finden. Dies schließt insbesondere den Einbezug der verschiedenen Speise- und Freilaufzustände ein.

Ein wesentlicher Unterschied zur reinen Brückenschaltung besteht in der kleineren Eingangsspannung u', die im Idealfall der in Fig. 2 dargestellten Schwellspannung u_{schwell} entspricht. Bei einer reinen Brückenschaltung wäre die Eingangsspannung u₁, mindestens jedoch die in Fig. 2 dargestellte Spannung ûₘₐₓ. Dadurch vermindert sich der Rippelstrom in der Drosselinduktivität L_{DC/AC} erheblich und/oder das AC-Filter kann wesentlich kleiner ausgelegt werden. Bei einer AC-Spannung von 230V (effektiv) wird die Schwellspannung typischer Weise zwischen 0V und 100V gewählt. Der tatsächliche Wert stellt einen Freiheitsgrad dar, der z.B. genutzt werden kann um einen möglichst guten Wirkungsgrad bei gleichzeitiger Einhaltung der Grenzwerte für die Strom-Oberschwingungen zu erreichen. Zum Beispiel würde man bei reiner Wirkleistung (Leistungsfaktor 1) die Schwellspannung auf 0V setzen, um so einen Betrieb zu erreichen, wie er im bekannten Stand der Technik beschrieben ist.

Fig. 5 verdeutlicht den Effekt der getakteten Brücke bei Blindleistung mit nacheilendem Strom. Dabei sind Stromverläufe i_{DC/DC} für das bekannte und erfindungsgemäß neue Verfahren dargestellt. Für vorauseilenden Strom ergibt sich ein ähnliches Bild. Für das aus dem Stand der Technik bekannte Verfahren ergibt sich wie bereits beschrieben im Zeitpunkt des Umschaltens der Brücke ein Sprung im Sollverlauf für den Strom i_{DC/DC} durch die Drosselinduktivität L_{DC/DC}. Durch den getakteten Betrieb der Brücke im Abschnitt (II) wird dieser Sollwertsprung vermieden. Im Abschnitt (II) ergibt sich vielmehr ein Verlauf, der einem Teilstück einer Sinuswelle entspricht. Lediglich beim Übergang vom Abschnitt (I) zum Abschnitt (II) und umgekehrt können kleine Sollwertsprünge auftreten, die jedoch zum einen wesentlich kleiner ausfallen als der Sprung im alten Verfahren und die zum anderen zu Zeitpunkten auftreten, zu denen eine größere Stellreserve verfügbar ist, die es erlaubt, die kleinen Sprünge schnell nachzufahren.

Ein Einsatz der Erfindung bei einer Photovoltaikanlage mit einer Mehrzahl von Solarzellenmodulen, einem Anschluss zur Einspeisung von durch die Solarzellenmodule erzeugter elektrischer Energie in ein Wechsel- bzw. Drehspannungsnetz ist besonders zweckmäßig.

## Patentansprüche

1. Ansteuerverfahren für eine rückspeisefähige Wechselrichteranordnung, insbesondere einen Solarzelleninverter einer Photovoltaikanlage, mit einem Gleichstromsteller zur Erzeugung von Halbwellen einer ausgangsseitigen Spannung (u') und einer Brückenschaltung, die dem Gleichstromsteller nachgeschaltet ist und aus der ausgangsseitigen Spannung (u') des Gleichstromstellers eine gewünschte Wechselspannung bildet, **dadurch gekennzeichnet, dass** ein erstes Ansteuerverfahren in einem ersten Abschnitt (I) und ein zweites Ansteuerverfahren in einem zweiten Abschnitt (II) für den Gleichstromsteller (12) und/oder die Brückenschaltung (13) durchgeführt werden, die abhängig von der ausgangsseitigen Spannung (u') des Gleichstromstellers (12) ausgewählt werden, wobei im ersten Abschnitt (I) der Gleichstromsteller Halbwellen der ausgangsseitigen Spannung des Gleichstromstellers (12) erzeugt, wodurch der Gleichstromsteller (12) den Betrag der Ausgangsspannung (u2) regelt und die Brückenschaltung (13) als Polwender auf die Halbwellen wirkt und nur das Vorzeichen der Ausgangsspannung (u₂) einstellt, und wobei im zweiten Abschnitt (II) eine Ansteuerung des Gleichstromstellers und der Brückenschaltung (13) derart erfolgt, dass der Gleichstromsteller eine konstante Spannung (u' = U_{schwell}) einstellt und die Brückenschaltung die Regelung des Betrags und des Vorzeichens der Ausgangsspannung (u₂) durchführt, wodurch eine Blindleistungsfähigkeit erhalten wird.

2. Ansteuerverfahren für eine Wechselrichteranordnung nach Anspruch 1, **dadurch gekennzeichnet, dass** die Brückenschaltung (13) und der Gleichstromsteller (12) eine vorgebbare Anzahl von ansteuerbaren Schaltmitteln (S1 - S6), insbesondere Halbleiterschalter umfasst.

3. Ansteuerverfahren für eine Wechselrichteranordnung, nach Anspruch 1, **dadurch gekennzeichnet, dass** im zweiten Abschnitt (II) die Ausgangsspannung (u') gleich einer Schwellwertspannung (U_{schwell}) ist.

4. Ansteuerverfahren für eine Wechselrichteranordnung, nach einem der vorhergehenden Ansprüche, **dadurch gekennzeichnet, dass** die ausgangsseitige Spannung (u') des Gleichstromstellers (12) im ersten Abschnitt (I) sinus-betrags-förmig eingestellt wird, und nur die Schaltmittel (S1, S2) des Gleichstromstellers (12) getaktet angesteuert werden und von den vier Schaltmitteln (S3 - S6) der Brückenschaltung (13) je zwei konstant geschlossen bzw. je zwei konstant offen sind und im zweiten Abschnitt (II) der Gleichstromsteller (12) eine konstante Ausgangsspannung (u') einstellt und die Schaltelemente (S3 -S6) der Brückenschaltung (13) so angesteuert werden, dass sich die gewünschte Wechsel-Ausgangsspannung (u₂) einstellt.

5. Ansteuerverfahren für eine Wechselrichteranordnung, nach einem der Ansprüche 1 bis 4, **dadurch gekennzeichnet, dass** die Spannungsschwelle (U_{schwell}) der ausgangsseitigen Spannung (u') des Gleichstromstellers (12) beliebig vorgebbar ist.

6. Ansteuerverfahren für eine Wechselrichteranordnung nach einem der Ansprüche 1 bis 5, **dadurch gekennzeichnet, dass** die Ansteuerung mittels einer Puls-Weiten-Modulation erfolgt.

7. Ansteuerverfahren für eine Wechselrichteranordnung, nach einem der Ansprüche 1 bis 6, **dadurch gekennzeichnet, dass** die Ansteuerung des Gleichstromstellers (12) so erfolgt, dass bei auftretender Blindleistung im zweiten Abschnitt (II) ein Ansteuerverfahren durchgeführt wird, das für die Spannung (u') einen Sollwert vorgibt, der einen Sprung des Soll-Stroms zwischen dem Gleichstromsteller und der Brückenschaltung verhindert und der Strom einen einem Teilstück einer Sinuswelle entsprechenden Verlauf nimmt.

8. Wechselrichteranordnung, eingerichtet zur Durchführung eines Ansteuerverfahrens nach einem der Ansprüche 1 bis 7, mit einem Gleichstromsteller (12) zur Erzeugung von Halbwellen einer ausgangsseitigen Spannung (u') und einer Brückenschaltung (13), die dem Gleichstromsteller (12) nachgeschaltet ist und aus der ausgangsseitigen Spannung (u') des Gleichstromstellers (12) eine gewünschte Wechselspannung bildet, **dadurch gekennzeichnet, dass** die Brückenschaltung (13) eine Induktivität (L_{DC/AC}) und einen Kondensator (C_{DC/AC}) umfasst.

9. Wechselrichteranordnung nach Anspruch 8, **dadurch gekennzeichnet, dass** die Induktivität (L_{DC/AC}) geteilt ist in zwei Induktivitäten (L_{DC/AC}/2), die mit je einer Seite des Kondensators (C_{DC/AC}) verbunden sind.

10. Wechselrichteranordnung, nach Anspruch 8 oder 9, **dadurch gekennzeichnet, dass** die Induktivität (L_{DC/AC}) und der Kondensator (C_{DC/AC}) der Brückenschaltung (13) nachgeschaltet sind.

## Claims

1. A control method for an inverter arrangement capable to provide reverse power, in particular a solar cell inverter of a photovoltaic system, comprising a DC-DC converter for generating half-waves of an output-side voltage (u') and a bridge circuit which is connected downstream of the DC-DC converter and forms a desired alternating voltage from the output-side voltage (u') of the DC-DC converter, **characterized in that** a first control method is carried out in a first section (I) and a second control method is carried out in a second section (II) for the DC-DC converter (12) and/or the bridge circuit (13), which are selected as a function of the output voltage (u') of the DC-DC converter (12), wherein in the first section (I) the DC-DC converter generates half-waves of the output voltage of the DC-DC converter (12), the DC-DC converter (12) regulating the absolute value of the output voltage (u2) and the bridge circuit (13) acting as an unfolding bridge on the half-waves and setting only the sign of the output voltage (u2), and wherein in the second section (II) the DC-DC converter and the bridge circuit (13) are controlled in such a way that the DC-DC converter sets a constant voltage (u' = U_{schwell}) and the bridge circuit controls the absolute value and the sign of the output voltage (u2), whereby a reactive power capability is obtained.

2. The control method for an inverter arrangement according to claim 1, **characterized in that** the bridge circuit (13) and the DC-DC converter (12) comprise a predefined number of controllable switching means (S1 - S6), in particular semiconductor switches.

3. The control method for an inverter arrangement according to claim 1, **characterized in that** in the second section (II) the output voltage (u') is equal to a threshold voltage (U_{schwell}).

4. The control method for an inverter arrangement according to one of the preceding claims, **characterized in that** the output-side voltage (u') of the DC-DC converter (12) is set in the form of a sinusoidal absolute value in the first section (I), and only the switching means (S1, S2) of the DC-DC converter (12) are controlled in a clocked manner and, out of the four switching means (S3 - S6) of the bridge circuit (13), two are constantly closed and two are constantly closed, respectively, and in the second section (II) the DC-DC converter (12) sets a constant output voltage (u') and the switching elements (S3 -S6) of the bridge circuit (13) are controlled in such a way that the desired alternating output voltage (u2) is set.

5. The control method for an inverter arrangement according to one of claims 1 to 4, **characterized in that** the voltage threshold (U_{schwell}) of the output-side voltage (u') of the DC-DC converter (12) can be arbitrarily set.

6. The control method for an inverter arrangement according to one of claims 1 to 5, **characterized in that** the control is effected by means of pulse-width modulation.

7. The control method for an inverter arrangement according to one of claims 1 to 6, **characterized in that** the control of the DC-DC converter (12) is carried out in such a way that, when reactive power occurs in the second section (II), a control method is carried out which prescribing a target value for the voltage (u') which prevents a jump in the target current between the DC-DC converter and the bridge circuit and the current takes a course corresponding to a portion of a sine wave.

8. An inverter arrangement, set up for carrying out a control process in accordance with one of claims 1 to 7, comprising a DC-DC converter (12) for generating half-waves of an output-side voltage (u') and a bridge circuit (13) which is connected downstream of the DC-DC converter (12) and forms a desired alternating voltage from the output-side voltage (u') of the DC-DC converter (12), **characterized in that** the bridge circuit (13) comprises an inductor (L_{DC/AC}) and a capacitor (C_{DC/AC}).

9. The inverter arrangement according to claim 8, **characterized in that** the inductance (L_{DC/AC}) is divided into two inductances (_{LDC/AC}/2) which are each connected to one side of the capacitor (C_{DC/AC}).

10. The inverter arrangement according to claim 8 or 9, **characterized in that** the inductance (L_{DC/AC}) and the capacitor (C_{DC/AC}) are connected downstream of the bridge circuit (13).

## Revendications

1. Procédé d'excitation pour un arrangement onduleur régénérateur, notamment un onduleur à cellules solaires d'une installation photovoltaïque, comprenant un convertisseur de courant continu destiné à générer des demi-ondes d'une tension en sortie (u') et un circuit en pont qui est branché en aval du convertisseur de courant continu et qui forme une tension alternative souhaitée à partir de la tension en sortie (u') du convertisseur de courant continu, **caractérisé en ce qu'**un premier procédé d'excitation est mis en oeuvre dans une première portion (I) et un deuxième procédé d'excitation est mis en oeuvre dans une deuxième portion (II) pour le convertisseur de courant continu (12) et/ou le circuit en pont (13), lesquelles sont sélectionnées en fonction de la tension en sortie (u') du convertisseur de courant continu (12), procédé selon lequel, dans la première portion (I), le convertisseur de courant continu génère les demi-ondes de la tension en sortie du convertisseur de courant continu (12), ce par quoi le convertisseur de courant continu (12) régule la valeur de la tension de sortie (u2) et le circuit en pont (13) agit en tant qu'inverseur de polarité sur les demi-ondes et ne règle que le signe de la tension de sortie (u2) et, dans la deuxième portion (II), une excitation du convertisseur de courant continu et du circuit en pont (13) est effectuée de telle sorte que le convertisseur de courant continu règle une tension constante (u' = U_{schwell}) et le circuit en pont réalise la régulation de la valeur et du signe de la tension de sortie (u2), ce qui permet d'obtenir une capacité de puissance réactive.

2. Procédé d'excitation pour un arrangement onduleur selon la revendication 1, **caractérisé en ce que** le circuit en pont (13) et le convertisseur de courant continu (12) comportent un nombre pouvant être prédéfini de moyens de commutation (S1 - S6) commandables, notamment des commutateurs semiconducteurs.

3. Procédé d'excitation pour un arrangement onduleur, selon la revendication 1, **caractérisé en ce que** dans la deuxième portion (II), la tension en sortie (u') est égale à une tension de seuil (U_{schwell}).

4. Procédé d'excitation pour un arrangement onduleur selon l'une des revendications précédentes, **caractérisé en ce que** la tension en sortie (u') du convertisseur de courant continu (12) est réglée sous la forme d'une valeur sinusoïdale dans la première portion (I), et seuls les moyens de commutation (S1, S2) du convertisseur de courant continu (12) sont excités de manière cadencée et parmi les quatre moyens de commutation (S3 - S6) du circuit en pont (13), deux sont respectivement fermés constamment ou deux sont respectivement ouverts constamment et, dans la deuxième portion (II), le convertisseur de courant continu (12) règle une tension en sortie (u') constante et les éléments de commutation (S3 - S6) du circuit en pont (13) sont excités de telle sorte que la tension de sortie alternative (u2) souhaitée s'établit.

5. Procédé d'excitation pour un arrangement onduleur selon l'une des revendications 1 à 4, **caractérisé en ce que** le seuil de tension (U_{schwell}) de la tension en sortie (u') du convertisseur de courant continu (12) peut être prédéfini de manière quelconque.

6. Procédé d'excitation pour un arrangement onduleur selon l'une des revendications 1 à 5, **caractérisé en ce que** l'excitation est effectuée au moyen d'une modulation d'impulsions en largeur.

7. Procédé d'excitation pour un arrangement onduleur selon l'une des revendications 1 à 6, **caractérisé en ce que** l'excitation du convertisseur de courant continu (12) est effectuée de telle sorte que lorsqu'il se produit une puissance réactive dans la deuxième portion (II), un procédé d'excitation est mis en oeuvre, lequel prédéfinit pour la tension (u') une valeur de consigne qui empêche un saut du courant de consigne entre le convertisseur de courant continu et le circuit en pont et le courant adopte un tracé correspondant à un tronçon d'une onde sinusoïdale.

8. Arrangement onduleur, conçu pour mettre en oeuvre un procédé d'excitation selon l'une des revendications 1 à 7, comprenant un convertisseur de courant continu (12) destiné à générer des demi-ondes d'une tension en sortie (u') et un circuit en pont (13) qui est branché en aval du convertisseur de courant continu (12) et qui forme une tension alternative souhaitée à partir de la tension en sortie (u') du convertisseur de courant continu (12), **caractérisé en ce que** le circuit en pont (13) comporte une inductance (L_{DC/AC}) et un condensateur (C_{DC/AC}) .

9. Arrangement onduleur selon la revendication 8, **caractérisé en ce que** l'inductance (L_{DC/AC}) est divisée en deux inductances (L_{DC/AC}/2) qui sont reliées à un côté respectif du condensateur (C_{DC/AC}) .

10. Arrangement onduleur selon la revendication 8 ou 9, **caractérisé en ce que** l'inductance (L_{DC/AC}) et le condensateur (C_{DC/AC}) sont branchés en aval du circuit en pont (13).
